# EUROPEAN PATENT SPECIFICATION

(11) **EP 2 400 853 B1**
(45) Date of publication and mention of the grant of the patent: **06.01.2016**
(21) Application number: 09776209.0
(22) Date of filing: 24.02.2009
(51) Int. Cl.: A22C 29/02

(54) **METHOD AND APPARATUS FOR REMOVING SHELLS FROM CRUSTACEANS**
VERFAHREN UND GERÄT ZUM ENTFERNEN DER SCHALEN VON SCHALENTIEREN
PROCÉDÉ ET APPAREIL POUR DÉCORTIQUER DES CRUSTACÉS

(43) Date of publication of application: 04.01.2012
(73) Proprietor: K.M. Fish Machinery A/S, 9352 Dybvad (DK)
(72) Inventor: CHRISTENSEN, Kaj, DK-9352 Dybvad (DK)
(74) Representative: Tellefsen, Jens J.
(86) International application number: PCT/DK2009/050042
(87) International publication number: WO 2010/097084

(56) References cited:
- DE-A1- 2 430 095
- US-A- 4 307 492
- US-A- 4 639 976
- US-A- 4 769 870

## Description

### Field of the Invention

The present invention relates to a method for removing the shell from crustaceans as well as an apparatus for carrying said method.

### Background of the Invention

In the art a number of methods and apparatuses have been suggested, and the present invention is an improvement of a device specifically suggested in US 4769870.

In the process plant suggested in US 4769870, the crustaceans and in particular shrimps are boiled before being introduced into a de-shelling system. After having passed through the de-shelling system, a suspension of crustacean meat, shells and water is pumped onto a wire conveyor belt in order to separate first the liquid from the suspension and thereafter the shells.

The de-shelling installation comprises an inlet funnel and a valve construction, which is operated by alternating between air pressure and air vacuum whereby the resilient valve member will open and close and thereby let crustaceans pass from the funnel and into the de-shelling chamber. In the de-shelling chamber, the crustaceans will, due to gravity and vacuum in the de-shelling chamber accelerate towards two oppositely inclined plate members such that the mechanical impact of the crustaceans on these inclined plate members in combination with the under pressure (vacuum) and the preheated crustaceans, cause the shells to separate from the meat part of the crustaceans. After having impacted the two inclined plate members, the shells and meat parts are collected in the bottom of the de-shelling system in a water pool. From the water pool, the water is pumped together with the shells and the meat to the above-mentioned wire conveyor belt.

### Object of the Invention

The present invention is specifically directed to an improvement in the de-shelling system in that the prior art device comprises a number of disadvantages that, although the apparatus when introduced into the market provided substantial advantages to the mechanised de-shelling of crustaceans and a relatively high percentage of de-shelling was achieved with the prior art device, the inventors of the present invention has further improved this de-shelling system such that very high de-shelling rates are achieved. Tests with the apparatus according to the present invention indicates that when the crustaceans are shrimps, a de-shelling rate of above 95% completely de-shelled shrimps is achieved and furthermore the production rate is higher and the energy consumption is lower.

The invention therefore aims at alleviating the disadvantages of the prior art device and improving the de-shelling rate as well as the productivity of the prior art devices as e.g. suggested in US 4769870.

### Description of the Invention

The present invention addresses this by providing a method for removing the shell from a crustacean. The method comprises the following method steps:
a) the crustaceans are heated;
b) the crustaceans are transferred to a funnel at the bottom of which, a valve is arranged, where said valve comprises a resilient cone shaped member, and a moveable valve plate, for opening and closing of the valve, such that as the valve is opened crustaceans are sucked through the cone shaped member, thereby arranging the crustaceans one by one during the passage through the cone shaped member;
c) a separating chamber arranged downstream from the valve, and in communication with said valve, where a substantially lower air pressure is present in the separating chamber relative to the ambient air pressure, and where separating means are arranged in said separating chamber, such that as the crustaceans enters the separating chamber, the lower air pressure and the separating means will detach the shell from the crustacean, during the crustaceans fall through the separating chamber;
d) where the crustaceans are collected in a water pool arranged in the bottom of the separating chamber, where the crustaceans on impact with the surface, if separation between shell and meat has not occurred by the separating means, will separate the shell from the meat; e) and that the water containing meat and shells is removed from the separating chamber for further separation of meat and shells.

In the prior art device mentioned above, the valve controlling the inlet of crustaceans from the funnel to the vacuum chamber/separating chamber was operated by a combined pressure and vacuum valve, such that by alternating opening and closing between two valves connecting one valve to a source of pressurized air and the other valve to a source of vacuum, a resilient pipe member arranged inside the connecting pipe between the funnel and the pressure chamber would open or close respectively thereby allowing crustaceans to enter the separating chamber. This led to a varying number of crustaceans entering the separating chamber by each opening and closing of the valve, and furthermore a relatively high vacuum was necessary inside the separating chamber in order to compensate for the opening and closing of the inlet valve. This in turn leads to a high energy consumption in order to provide both pressurised air and vacuum for the proper operation of the device.

With the present invention, the cone shaped resilient member guides the crustaceans from the funnel towards the valve member separating the inlet from the separating chamber in such a manner that the crustaceans are arranged in "single file". By arranging the crustaceans such that they are introduced into the separating chamber one by one, a number of advantages are achieved:
Firstly, by introducing the crustaceans one by one into the separating chamber, it is assured that each crustacean will impact the separating means in the separating chamber. In prior art devices allowing more than one crustaceans into a separating chamber at a time, it was possible that one crustacean instead of impacting the inclined separating plate in the separating chamber impacted another crustacean. The crustacean being softer (resilient) would cushion the impact and thereby minimise the effect of the impact such that overall only very little de-shelling was effected in the separating chamber. Therefore, by separating the crustaceans such that they are introduced into the separating chamber one by one, it is assured that each single crustacean will impact the separating means arranged in the separating chamber.
Secondly, the wide opening of the prior art valve between the inlet funnel and the separating chamber required a substantial under-pressure/vacuum to be present in the separating chamber. The present construction, however, having an opening and closing valve with a movable valve plate, drastically reduces the pressure loss through the inlet funnel.
Thirdly, the resilient cone shaped member being separated from the valve assures that no crustaceans are caught in the valve closing mechanism, and furthermore the cone shaped member being dimensioned to that particular type of crustacean arranges the crustacean in a general uniform orientation and furthermore due to the design of the resilient cone shaped member it may be designed such that the passage of the crustaceans through the cone shaped member only has a limited influence on the constitution of the crustaceans. It is desirable to assure that all de-shelling occurs inside the separating chamber in that parts of shells stuck in the cone shaped member or the valve may deteriorate the process as such. Therefore, by designing the cone shaped member to correspond to the crustaceans being treated, further enhancement of the production process may be achieved. In the prior art device, the opening and closing valve would inherently squeeze crustaceans caught during passage of the valve member in its closing mode of operandi, and thereby partly ruin the crustaceans being caught there, but also under some circumstances not completely close off the valve between the funnel and the separating chamber such that a pressure loss could be present at all times.

In a further advantageous embodiment of the method according to the invention, prior to step a) of the method mentioned above, the crustaceans may be boiled and cooled, and that the heating in step a) is a very short heating, such that only the shell, and liquid and/or tissue immediately under the shell is heated, where a temperature of 50° to 150° more preferred 80°C to 110°C is achieved. By heating the shell and the liquid immediately under the shell prior to introducing the crustaceans into the separating chamber, an improved separating process is achieved. This is due to the fact that as the crustaceans are heated at ambient air pressure and thereafter introduced into an under-pressure, the under-pressure will cause the liquid to expand rapidly almost having the characteristics of an explosion such that the shells will be jettisoned away from the meat portion of the crustaceans and thereby even prior to impacting the separating means in the separating chamber, the crustaceans will have been de-shelled to a large degree. This is due to the anatomy of the crustaceans which usually have a hard shell covering their sides and back but a relatively soft protective cover in their belly section. When they are exposed to the large pressure difference, which is enforced by the elevated temperature, the soft belly part will tend to rupture and allow the entire shell to be removed. The amount of heating shall also be seen in relation to the airpressure (see below) as the combination of temperature and air pressure will cause the desired effect.

The heating may be carried out by exposing the crustaceans to a gas flame, steam, hot air jets or the like immediately prior to entering either the funnel, the cone shaped resilient member or the space between the cone-shaped member and the valve plate.

In a further advantageous embodiment of the method, the distance between the cone shaped member and the surface of the water in the pool may be varied.

Tests have indicated that as the crustaceans leave the cone shaped member and are sucked into the separating chamber, they accelerate due to the combination of the influence of gravity and the influence of pressure difference between ambient pressure in the inlet funnel and the under-pressure in the separating chamber. By adjusting the distance between the inlet and the water surface, the crustacean has a distance available in order to accelerate in the separating chamber, where the impact with the water surface may be designed such that any remaining shell fraction still left after the crustacean has passed through the separating means in the separating chamber may be removed upon impact with the water surface. On the other hand, the water is provided in order to brake the fall of the crustacean, and as such the crustacean's speed should not exceed certain limits depending on the type of crustacean. For certain fragile types of crustaceans, it is desirable to be able to have a relatively low speed such that the impact with the water surface is as mild as possible and thereby the breaking effect as gentle as possible such that the crustaceans meat is not ruined by this impact. On the other hand, for certain type of more tough crustaceans the extra speed and the high impact with the water surface may result in even higher de-shelling percentages.

In a still further advantageous embodiment of the invention, the removal of water in method step e) is carried out in a batch-wise fashion, such that the surface of the water is clear from debris such as meat and shells, and that extra water is added corresponding to the removed water quantity.

By removing the water batch-wise e.g. by arranging a system of two valves arranged in a pipe at a distance and then sequentially opening and closing one or the other valve and at the same time adding water to the pool inside the separating chamber, a substantially clear water surface is provided. When debris such as shells and other foreign matter are floating on the water surface, the impact between the crustaceans being transported to the separating chamber and the surface debris on the water may be so violent that the meat portion of the crustacean is damaged. Furthermore, an important feature of the invention is to design the speed with which the crustaceans hit the water surface such that complete de-shelling is achieved without damaging the product, and the floating debris in the surface may render this design useless in that other parameters need to be taken into consideration if there is a risk of the crustacean travelling through the separating chamber hitting debris instead of a clear water surface.
By furthermore removing the water batch-wise and at the same time adding an equal amount of fresh water to the pool, the water level will remain more or less constant relating to the level inside the separating chamber such that also the under-pressure in the separating chamber will be uninfluenced by the batch-wise removal of water and crustaceans.

In a further advantageous embodiment of the invention, the under-pressure in the separating chamber is 10 % to 90% lower more preferred 30 % to 70 % lower than ambient air pressure, whereby the combination of the lower pressure and the temperature of the shell and the tissue and/or liquid in the immediate vicinity of the shell causes the water to turn to steam thereby loosen or separating the shell from the meat.

In the prior art devices, it is necessary to have a substantially lower air pressure inside the separating chamber in order to achieve the separating process which in turn requires a larger vacuum generator and thereby increased energy consumption. By being able to operate with under-pressure in the range 30 % to 70 %, less energy is spent maintaining the under-pressure. The level of under-pressure where 30 % relates to 30 % less than ambient pressure and 70 % corresponds to 70 % lower air pressure than ambient air pressure, the under-pressure inside the separating chamber may be selected according to the type of crustacean being de-shelled in the installation. The air pressure will be adjusted according to the type of crustacean, the age of the crustacean, the temperature, the duration of treatment and other factors such that the entire production process is optimized with respect to both productivity and energy cost.
The invention is also directed to an apparatus having the inventive features as set out in the independent apparatus claim 6 with dependant claims defining further advantageous embodiments of the invention.

### Description of the Drawing

Fig. 1 illustrates a simplified cross section through a de-shelling apparatus;
Fig. 2 illustrates a more detailed view of the inlet arrangement.

### Detailed Description of the Invention

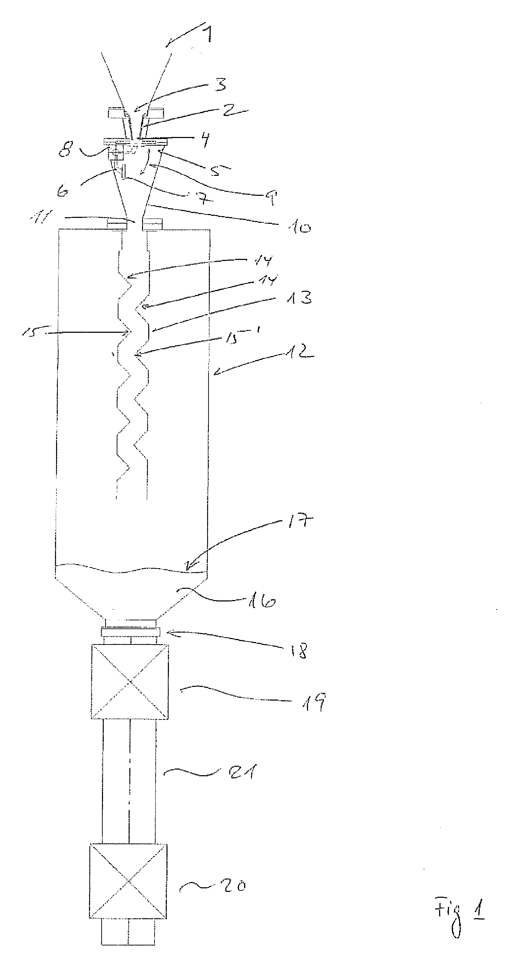

Fig. 1 illustrates a simplified cross section through a de-shelling apparatus according to the invention. The apparatus comprises an inlet funnel 1 arranged at an upper end of the apparatus. At the bottom of the inlet funnel, a resilient cone shaped member 2 is arranged. The cone shaped member is easily replaceable such that cone shaped members having different openings both inlet openings 3 and outlet openings 4 may be utilised depending on the type of crustaceans which is to be de-shelled in the apparatus.

Immediately adjacent, the outlet 4 of the cone shaped resilient member 2 is provided a valve construction 5. The valve in this embodiment comprises a valve stem 6 and a valve plate 7 connected to a valve motor 8 such that the valve plate may be manipulated from a position as illustrated in full lines in figure 1 into a closed position illustrated by dash lines reciprocally as indicated by the arrow 9.

The valve 5 is arranged in valve chamber 10 which has an opening 11 into the main separating chamber 12.

Inside the main separating chamber 12, separating means are provided in the shape of a maze 13 such that crustaceans being introduced into the inlet funnel 1 will pass the cone shaped member 2 when the valve 5 is in its open position such that the crustaceans will enter the maze 13.

The maze is dimensioned such that it has a number of inclined surfaces 14 on which the crustaceans will impact, whereby the shells will be loosened from the meat section of the crustacean. The distance between two adjacent peaks 15,15' in the maze is dimensioned such that they do not overlap. This is due to the fact that by having a small gap between the two peaks 15,15', it is assured that crustaceans, shells and other debris may pass at a relatively high speed through the separating maze 13, thereby increasing the productivity. Tests have furthermore shown that if a shrimp should pass completely unhindered through the separating maze, the combination of high temperature in the outer section of the crustaceans and the under-pressure inside the separating chamber will cause the shell to more or less explode free of the meat portion such that a relatively high de-shelling percentage is achieved anyway.

In the bottom of the separating chamber a water pool 16 is arranged having a water surface 17. Furthermore, means for supplying fresh water (not illustrated) may be controlled such that the water surface 17 is maintained at a fixed or constant distance in relation to the valve 5. In this connection, it should also be noted that the separating chamber is provided with inlets and outlets for generating an under-pressure inside the separating chamber in the range of 30 % to 70 % of the ambient pressure but for clarity purposes the installation relating to the under-pressure generation has not been indicated.

At the bottom of the separating chamber 12, an outlet 18 is furthermore provided such that the water from the pool 16 may be extracted together with the shells and the meat from the crustaceans. In order to provide a batch-wise extraction of water, crustaceans and shells, two valves 19,20 are provided in the outlet pipe 21. In this manner when opening valve 19, the water 16 will flow into the outlet pipe 21, afterwards the valve 19 is closed and the valve 20 is opened whereby the water containing water, meat and shells may be pumped on to further processing and separation. At the same time, the water pool is replenished by means not illustrated such that the water level 17 is maintained at a substantially constant level in relation to the valve installation 5. In this manner, the under-pressure inside the separating chamber 12 is not seriously influenced by the draining of liquid, meat and shells from the separating chamber, and neither is there any influence from the valve 5 due to the quick action of the valve seat in combination with the cone shaped member 2, such that only negligible pressure loss is experienced.

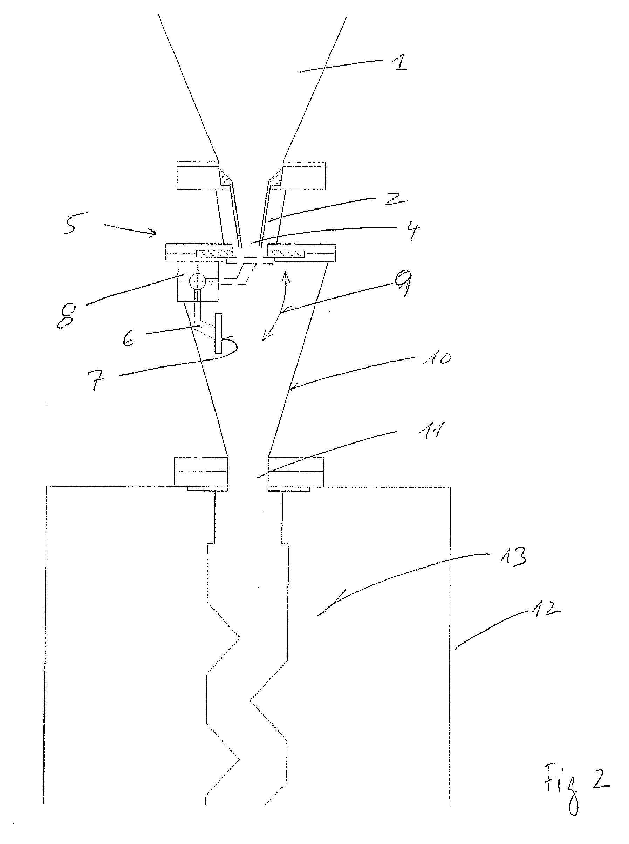

The valve 5 will be further explained with reference to fig. 2. Like features are provided with like reference numerals.

As the crustacean enters the inlet funnel 1, the cone shaped resilient member 2 is shaped such that the outlet of the cone shaped member 4 has a diameter slightly larger than the largest diameter of the crustacean to be de-shelled. The crustacean has a substantially longitudinal body shape and by passing through the cone shaped member 2, the longitudinal axis of the crustacean will be guided into a substantially vertical orientation. By furthermore designing the opening 4 such that the opening may be 1-3 mm larger that the diameter of the periphery of the crustaceans cross section perpendicular to the longitudinal direction of the crustacean, it is assured that only one crustacean is forced through the cone shaped member at a time. By having an opening time that is to say when the valve plate 7 is in the position as indicated in bold lines in fig. 2, the crustaceans will be able to pass through the valve and thereby enter the separating chamber 12. The valve is opened depending on the size of the crustaceans but between 0,2 to 0,6 seconds allowing one to four crustaceans to pass at any one opening cycle. For other types of crustaceans and at other temperatures and air pressures it will be necessary to vary the cyclus-time between 0,1 to 30 seconds, more preferred 0,2 to 8 seconds and most preferred 0,6 to 5 seconds. Preferably, only one crustacean will pass through the valve construction, and due to the very rapid cyclus time of opening and closing the valve 5, approximately one to five shrimps may pass into the separating chamber per cone shaped member per second. By arranging an array of cone shaped members and valve mechanisms a relatively high production may be achieved.

In the embodiment illustrated in fig. 2, the valve plate 7 is mounted on a valve stem 6 being operated by the valve motor 8. Alternatively, a rotating valve member may be arranged in the vicinity of the outlet 4 of the cone shaped member such that by rotating the valve member, it will very rapidly open and close and thereby achieve the same functionality as a valve illustrated with reference to fig. 1 and 2. The valve may also be in the shape of a circular valve plate being rotated in the same plate as the valve plate 7s closed position illustrated by dash lines such that as the valve plate is rotated, apertures provided in the valve plate may be superposed the outlet 4 of the cone shaped member 2 such that crustaceans may pass through the apertures until the solid part of the valve plate is rotated into a position where it blocks the outlet 4 of the cone shaped member 2.

Although the invention has been explained with reference to specific embodiments, these shall only be construed as illustrations only and variations may be contemplated without departing from the scope of the appended claims.

## Claims

1. Method for removing the shell from crustaceans, in particular shrimps, where the method comprises the following method steps:
a) the crustaceans are heated;
b) the crustaceans are transferred to a funnel (1) at the bottom of which a valve (5) is arranged c) a separating chamber (12) arranged downstream from the valve (5), and in communication with said valve (5), where a substantially lower air pressure is present in the separating chamber (12) relative to the ambient air pressure, and where separating means (13) are arranged in said separating chamber (12), such that as the crustaceans enters the separating chamber (12), the lower air pressure and the separating means (13) will detach the shell from the crustacean, during the crustaceans fall through the separating chamber (12);
d) where the crustaceans are collected in a water pool (16) arranged in the bottom of the separating chamber (12), where the crustaceans on impact with the surface, if separation between shell and meat has not occurred by the separating means (13), will separate the shell from the meat;
e) and that the water containing meat and shells is removed from the separating chamber (12) for further separation of meat and shells Charac
terised in that
said valve (5) comprises a resilient cone shaped member (2) and a moveable valve plate (8), for opening and closing of the valve (5), such that as the valve (5) is opened crustaceans are sucked through the cone shaped member (2), thereby arranging the crustaceans one by one during the passage through the cone shaped member (2).

2. Method according to claim 1 wherein prior to step a) the crustaceans may be boiled and cooled, and that the heating in step a) is a very short heating, such that only the shell, and liquid and/or tissue immediately under the shell is heated, where a temperature in the range of 50 °C to 150 °C more preferably 80°C to 110°C is achieved.

3. Method according to claim 1 wherein the distance between the cone-shaped member (2) and the surface of the water in the pool (16) may be varied.

4. Method according to claim 1 wherein the removal of water in method step e) is carried out in a batch-wise fashion, such that the surface of the water is clear from debris such as meat and shells, and that extra water is added corresponding to the removed water quantity.

5. Method according to claim 1, wherein the under-pressure in the separating chamber is 10% to 90% lower or more preferred 30 % to 70 % lower than ambient air pressure, whereby the combination of the lower pressure and the temperature of the shell and the tissue and/or liquid in the immediate vicinity of the shell causes the water to turn to steam thereby loosen or separating the shell from the meat.

6. Apparatus for separating shells from meat of crustaceans, in particular shrimps, where the apparatus comprises an inlet (1) for crustaceans; a separating chamber (12) and a first valve (5), separating the inlet (1) from the separating chamber (12), where a water pool (16) is arranged at the bottom of the separating chamber (12), and that means for providing a lower air pressure in the separating chamber (12) than the ambient air pressure is provided, and that a second valve (19) is arranged adjacent the bottom of the pool (16), for allowing the water to be extracted
**characterised in that**
the first valve (5) comprises a cone shaped resilient member (2), where the tip of the cone is oriented towards the separating chamber (12), and where the cone (2) is open in both ends, where the smallest diameter of the aperture in the tip of the cone (2) is equal to or slightly larger than the widest part of the crustacean to be treated and that a moveable valve plate (7), for opening and closing of the valve (5).

7. Apparatus according to claim 6 where the first valve comprises a replaceable cone shaped member (2), and where a valve plate (7) is provided having two positions, either closed or open, and where said valve plate (7) alternates between said open and said closed position at substantially even intervals, where the intervals are selected between 0,1 to 30 seconds, more preferred 0,2 to 8 seconds and most preferred 0,6 to 5 seconds.

8. Apparatus according to claim 6 wherein a separating maze (13) is arranged in the separating chamber (12), at least for part of the distance between the tip of the cone and the surface (17) of the water pool (16), where said maze (13) comprises mechanical obstacles (15,15'), against which obstacles the crustaceans will impact.

9. Apparatus according to claim 6 wherein the second valve (19) at the bottom of the pool (16) is connected to an outlet, and that a third valve (20) is arranged in said outlet at a distance downstream from the second valve (19), where the second and third valves (19,20) are operated such that only one of the valves (19,20) are open at a time.

10. Apparatus according to claim 6 wherein means for creating an under-pressure is in communication with the separating chamber (12), where the means can create an under-pressure in the range of between 10 % to 90 % more preferred 30 % to 70 %.

## Patentansprüche

1. Verfahren zum Entfernen der Schale von Krustentieren, insbesondere Garnelen, wobei das Verfahren die folgenden Verfahrensschritte umfasst:
a) die Krustentiere werden erhitzt;
b) die Krustentiere werden zu einem Trichter (1) überführt, an dessen Boden ein Ventil (5) angeordnet ist;
c) eine Trennkammer (12), die dem Ventil (5) nachgelagert angeordnet ist und mit dem Ventil (5) in Verbindung steht, wobei in der Trennkammer (12) im Vergleich zum Umgebungsluftdruck ein wesentlich niedrigerer Luftdruck herrscht, und wobei Trennmittel (13) in der Trennkammer (12) derart angeordnet sind, dass beim Eintritt der Krustentiere in die Trennkammer (12) der niedrigere Luftdruck und die Trennmittel (13) die Schale vom Krustentier ablösen, während die Krustentiere durch die Trennkammer (12) fallen;
d) wobei die Krustentiere in einem Wasserbecken (16) gesammelt werden, das am Boden der Trennkammer (12) angeordnet ist, wobei, sofern eine Trennung der Schale vom Fleisch noch nicht durch die Trennmittel (13) erfolgt ist, die Krustentiere beim Auftreffen auf die Oberfläche die Schale vom Fleisch trennen;
e) und das Wasser, das das Fleisch und die Schalen enthält, wird zur weiteren Trennung des Fleischs von den Schalen aus der Trennkammer (12) entfernt,
**dadurch gekennzeichnet, dass**
das Ventil (5) ein elastisches kegelförmiges Element (2) und eine bewegliche Ventilplatte (8) zum Öffnen und Schließen des Ventils (5) umfasst, so dass, wenn das Ventil (5) geöffnet wird, die Krustentiere durch das kegelförmige Element (2) gesaugt werden, wodurch die Krustentiere beim Durchgang durch das kegelförmige Element (2) einzeln nacheinander angeordnet sind.

2. Verfahren nach Anspruch 1, wobei vor Schritt a) die Krustentiere gekocht und abkühlen gelassen werden können, und das Erhitzen in Schritt a) ein sehr kurzes Erhitzen ist, so dass nur die Schale und Flüssigkeit und/oder Gewebe direkt unter der Schale erhitzt wird, wobei eine Temperatur im Bereich von 50 °C bis 150 °C, weiter bevorzugt von 80 °C bis 110 °C, erreicht wird.

3. Verfahren nach Anspruch 1, wobei die Entfernung zwischen dem kegelförmigen Element (2) und der Oberfläche des Wassers im Becken (16) variiert werden kann.

4. Verfahren nach Anspruch 1, wobei das Entfernen des Wassers im Verfahrensschritt e) chargenweise ausgeführt wird, so dass die Oberfläche des Wassers frei von Rückständen wie Fleisch und Schalen ist, und dass zusätzliches Wasser entsprechend der entfernten Wassermenge hinzugegeben wird.

5. Verfahren nach Anspruch 1, wobei der Unterdruck in der Trennkammer 10 % bis 90 % niedriger oder weiter bevorzugt 30 % bis 70 % niedriger als der Umgebungsluftdruck ist, wobei die Kombination aus dem niedrigeren Druck und der Temperatur der Schale und des Gewebes und/oder der Flüssigkeit in unmittelbarer Nähe der Schale bewirkt, dass sich das Wasser in Dampf umwandelt und dabei die Schale lockert oder vom Fleisch trennt.

6. Vorrichtung zum Trennen von Schalen vom Fleisch von Krustentieren, insbesondere Garnelen, wobei die Vorrichtung Folgendes umfasst: einen Einlass (1) für Krustentiere; eine Trennkammer (12) und ein erstes Ventil (5), das den Einlass (1) von der Trennkammer (12) trennt, wobei ein Wasserbecken (16) am Boden der Trennkammer (12) angeordnet ist, und ein Mittel zum Bereitstellen eines niedrigeren Luftdrucks in der Trennkammer (12) als der Umgebungsluftdruck wird bereitgestellt, und ein zweites Ventil (19) ist neben dem Boden des Beckens (16) angeordnet, um zu ermöglichen, dass das Wasser entnommen wird,
**dadurch gekennzeichnet, dass**
das erste Ventil (5) ein kegelförmiges elastisches Element (2), wobei die Spitze des Kegels in Richtung der Trennkammer (12) ausgerichtet ist, und wobei der Kegel (2) an beiden Enden offen ist, wobei der kleinste Durchmesser der Öffnung in der Spitze des Kegels (2) genauso groß oder etwas größer als der breiteste Teil des zu behandelnden Krustentiers ist, und eine bewegliche Ventilplatte (7) zum Öffnen und Schließen des Ventils (5) umfasst.

7. Vorrichtung nach Anspruch 6, wobei das erste Ventil ein ersetzbares kegelförmiges Element (2) umfasst und wobei eine Ventilplatte (7) bereitgestellt wird, die zwei Stellungen aufweist, entweder geschlossen oder offen, und wobei die Ventilplatte (7) in im Wesentlichen gleichmäßigen Intervallen zwischen der offenen und der geschlossenen Stellung abwechselt, wobei die Intervalle zwischen 0,1 bis 30 Sekunden, weiter bevorzugt zwischen 0,2 bis 8 Sekunden und am meisten bevorzugt zwischen 0,6 und 5 Sekunden, ausgewählt werden.

8. Vorrichtung nach Anspruch 6, wobei ein Trennlabyrinth (13) zumindest über einen Teil des Abstands zwischen der Spitze des Kegels und der Oberfläche (17) des Wasserbeckens (16) in der Trennkammer (12) angeordnet ist, wobei das Labyrinth (13) mechanische Hindernisse (15, 15`) umfasst, auf die die Krustentiere auftreffen.

9. Vorrichtung nach Anspruch 6, wobei das zweite Ventil (19) am Boden des Beckens (16) mit einem Auslass verbunden ist und ein drittes Ventil (20) in dem Auslass in einer Entfernung stromabwärts des zweiten Ventils (19) angeordnet ist, wobei das zweite und das dritte Ventil (19, 20) so betrieben werden, dass immer nur jeweils eines der Ventile (19, 20) geöffnet ist.

10. Vorrichtung nach Anspruch 6, wobei das Mittel zum Erzeugen eines Unterdrucks mit der Trennkammer (12) in Verbindung steht, wobei das Mittel einen Unterdruck im Bereich von 10 % bis 90 %, weiter bevorzugt 30 % bis 70%, erzeugen kann.

## Revendications

1. Procédé pour éliminer la coque de crustacés, en particulier des crevettes, dans lequel le procédé comprend les étapes de procédé suivantes :
a) les crustacés sont chauffés ;
b) les crustacés sont transférés à un entonnoir (1) au fond duquel une valve (5) est agencée ;
c) une chambre de séparation (12) agencée en aval de la valve (5), et en communication avec ladite valve (5), dans lequel une pression d'air sensiblement inférieure est présente dans la chambre de séparation (12) relativement à la pression de l'air ambiant, et dans lequel des moyens de séparation (13) sont agencés dans ladite chambre de séparation (12), de telle sorte que, lorsque les crustacés entrent dans la chambre de séparation (12), la pression de l'air inférieure et les moyens de séparation (13) séparent la coque du crustacé, durant la chute des crustacés à travers la chambre de séparation (12) ;
d) dans lequel les crustacés sont amassés dans une accumulation d'eau (16) agencée au fond de la chambre de séparation (12), dans lequel les crustacés, lors de l'impact avec la surface, si la séparation entre la coque et la chair n'a pas eu lieu par l'intermédiaire des moyens de séparation (13), sépareront la coque de la chair ;
e) et que l'eau contenant la chair et les coques est éliminée de la chambre de séparation (12) pour une séparation supplémentaire de la chair et des coques,
**caractérisé en ce que**
ladite valve (5) comprend un organe résilient de forme conique (2) et une plaque de valve mobile (8), pour l'ouverture et la fermeture de la valve (5), de telle sorte que, lorsque la valve (5) est ouverte, des crustacés sont aspirés à travers l'organe de forme conique (2), agençant ainsi les crustacés un par un durant le passage à travers l'organe de forme conique (2).

2. Procédé selon la revendication 1, dans lequel, avant l'étape a), les crustacés peuvent être cuits à l'eau et refroidis, et que le chauffage dans l'étape a) est un chauffage très court, de telle sorte que seulement la coque, et du liquide et/ou un tissu immédiatement en dessous de la coque est chauffé, dans lequel une température dans la plage de 50 °C à 150 °C, mieux encore 80 °C à 110 °C, est obtenue.

3. Procédé selon la revendication 1 dans lequel la distance entre l'organe de forme conique (2) et la surface de l'eau dans l'accumulation (16) peut être variée.

4. Procédé selon la revendication 1, dans lequel l'élimination de l'eau dans l'étape de procédé e) est réalisée de façon discontinue, de telle sorte que la surface de l'eau est dégagée de débris, tels que de la chair et des coques, et que de l'eau supplémentaire est ajoutée proportionnellement à la quantité d'eau éliminée.

5. Procédé selon la revendication 1, dans lequel la sous-pression dans la chambre de séparation est inférieure de 10 % à 90 %, ou mieux encore de 30 % à 70 %, à la pression de l'air ambiant, dans lequel l'association de la pression inférieure et de la température de la coque et du tissu et/ou du liquide dans le voisinage immédiat de la coque fait en sorte que l'eau se transforme en vapeur, ainsi desserrant ou séparant la coque de la chair.

6. Appareil pour séparer des coques de la chair de crustacés, en particulier des crevettes, dans lequel l'appareil comprend une entrée (1) pour crustacés ; une chambre de séparation (12) et une première valve (5), séparant l'entrée (1) de la chambre de séparation (12), dans lequel une accumulation d'eau (16) est agencée au fond de la chambre de séparation (12), et que des moyens pour fournir une pression d'air inférieure dans la chambre de séparation (12) à la pression de l'air ambiant sont prévus, et qu'une deuxième valve (19) est agencée de façon adjacente au fond de l'accumulation (16), pour permettre à l'eau d'être extraite,
**caractérisé en ce que**
la première valve (5) comprend un organe résilient de forme conique (2), dans lequel l'embout du cône est orienté vers la chambre de séparation (12), et dans lequel le cône (2) est ouvert dans les deux extrémités, dans lequel le diamètre le plus petit de l'ouverture dans l'embout du cône (2) est égal ou légèrement plus grand que la partie la plus large du crustacé destiné à être traité et qu'une plaque de valve mobile (7), pour l'ouverture et la fermeture de la valve (5).

7. Appareil selon la revendication 6, dans lequel la première valve comprend un organe de forme conique remplaçable (2), et dans lequel une plaque de valve (7) est prévue possédant deux positions, fermée ou ouverte, et dans lequel ladite plaque de valve (7) alterne entre ladite position ouverte et ladite position fermée à des intervalles sensiblement réguliers, dans lequel les intervalles sont sélectionnés entre 0,1 et 30 secondes, mieux encore 0,2 et 8 secondes et idéalement 0,6 et 5 secondes.

8. Appareil selon la revendication 6, dans lequel un labyrinthe de séparation (13) est agencé dans la chambre de séparation (12), au moins sur une partie de la distance entre l'embout du cône et la surface (17) de l'accumulation d'eau (16), dans lequel ledit labyrinthe (13) comprend des obstacles mécaniques (15, 15'), contre lesquels obstacles les crustacés heurteront.

9. Appareil selon la revendication 6, dans lequel la deuxième valve (19) au fond de l'accumulation (16) est raccordée à une sortie, et qu'une troisième valve (20) est agencée dans ladite sortie à une distance en aval de la deuxième valve (19), dans lequel les deuxième et troisième valves (19, 20) sont actionnées de telle sorte que seulement une des valves (19, 20) est ouverte à la fois.

10. Appareil selon la revendication 6, dans lequel des moyens pour créer une sous-pression sont en communication avec la chambre de séparation (12), dans lequel les moyens peuvent créer une sous-pression dans la plage entre 10 % et 90 %, mieux encore 30 % et 70 %.
